# EUROPÄISCHE PATENTSCHRIFT

(11) **EP 3 510 296 B1**
(45) Veröffentlichungstag und Bekanntmachung des Hinweises auf die Patenterteilung: **30.12.2020**
(21) Anmeldenummer: 17771356.7
(22) Anmeldetag: 07.09.2017
(51) Int. Cl.: F16D 48/08, F16D 13/38, F16D 21/06, B60K 28/16, B60W 10/113

(54) **VERFAHREN ZUR DURCHFÜHRUNG VON LAUNCHCONTROL-ANFAHRTEN**
METHOD FOR CARRYING OUT LAUNCH CONTROL STARTING PROCESSES
PROCÉDÉ DE RÉALISATION DE DÉMARRAGES DE TYPE À COMMANDE DE LANCEMENT

(30) Priorität: 09.09.2016 DE 102016217187
(43) Veröffentlichungstag der Anmeldung: 17.07.2019
(73) Patentinhaber: Volkswagen Aktiengesellschaft, 38440 Wolfsburg (DE); BorgWarner Inc., Auburn Hills, MI 48326 (US)
(72) Erfinder: MARCHLEWSKI, Marko, 38554 Weyhausen (DE); GROSSER, Danny, 01277 Dresden (DE)
(74) Vertreter: MFG Patentanwälte Meyer-Wildhagen Meggle-Freund Gerhard PartG mbB
(86) Internationale Anmeldenummer: PCT/EP2017/072442
(87) Internationale Veröffentlichungsnummer: WO 2018/046587

(56) Entgegenhaltungen:
- EP-A1- 2 752 345
- DE-A1- 10 156 940
- DE-A1- 10 247 970
- DE-A1-102013 114 958
- GB-A- 2 509 934
- US-A1- 2015 226 321

## Beschreibung

Die Erfindung betrifft das Gebiet der Kraftfahrzeuggetriebe, insbesondere ein Verfahren zur Durchführung von LaunchControl-Anfahrten ("Rennstarts").

Aus der Offenlegungsschrift DE 10 2013 13 958 A1 ist eine Anfahrtsteuerung eines Fahrzeugs mit einem Doppelkupplungsgetriebe und einem Getriebesteuerungsmodul bekannt. Doppelkupplungsgetriebe kombinieren bestimmte Merkmale von manuellen und automatischen Getrieben. In einem Doppelkupplungsgetriebe mit ungeradzahligen und geradzahligen Zahnradsätzen wird eine Eingangskupplung eingerückt, um einen der ungeradzahligen Zahnradsätze in Eingriff zu bringen. Ebenso wird eine weitere Eingangskupplung eingerückt, um einen der geradzahligen Zahnradsätze in Eingriff zu bringen. Ein Bordgetriebe-Controller prognostiziert den nächsten zu wählenden Gang unter Verwendung verfügbarer Steuerungseingänge, wie Beschleunigung der Kraftmaschine und des Bremsniveaus, und befiehlt dann das Einlegen des nächsten Gangs zu Beginn des bevorstehenden Schaltens. Im Vergleich mit einem konventionellen Getriebe kann ein Doppelkupplungsgetriebe schnellere Gangwechsel liefern, in der Regel mit einer verbesserten Schaltsteuerung und erhöhter Leistung.

Das Getriebesteuerungsmodul der DE 10 2013 13 958 A1 dient dazu, ein Anfahrsteuerungsverfahren auszuführen. Ein Motorsteuerungsmodul und das Getriebesteuerungsmodul arbeiten während des Anfahrens des Fahrzeugs zusammen, um schließlich mit der Zeit ein zum Steuern einer Position einer bestimmten der Eingangskupplungen des Doppelkupplungsgetriebes verwendetes Positionssteuerungssignal zu berechnen und zu modifizieren. Das Positionssignal befiehlt letztendlich eine Einrückposition der bestimmten Eingangskupplung, d. h. eine axiale Position des Kolbens oder eines/anderer Aktors/Aktoren, der/die zum Einrücken der Eingangskupplung verwendet wird/werden.

Die DE 101 56 940 A1 beschreibt ein Verfahren zum Anfahren eines Kraftfahrzeugs mit einer Doppelkupplung. Hierbei werden zuerst bei noch stehendem Kraftfahrzeug eine Abtriebsdrehzahl einer Antriebseinheit auf ein Ausgangs-Drehzahlniveau gebracht und danach die Antriebseinheit derart betrieben und eine erste und zweite Kupplungsanordnung gemeinsam soweit eingerückt werden, dass die erste Kupplungsanordnung ein erstes Moment und die zweite Kupplungsanordnung ein zweites Moment auf eine jeweilige Getriebeeingangswelle überträgt.

Aus der Offenlegungsschrift DE 103 05 297 A1 ist ein Verfahren zur Steuerung eines vom Fahrer anwählbaren Anfahrvorganges eines Kraftfahrzeuges im Zusammenhang mit einem Rennstart-Anfahrvorgang ("LaunchControl") bekannt. Diese LaunchControl ermöglicht auf griffiger Fahrbahn eine optimale Fahrzeugbeschleunigung. Diese bekannte LaunchControl wird angewählt, indem bei stehendem Fahrzeug das Schlupfregelsystem deaktiviert wird, ein spezielles Fahrprogramm gewählt wird, der Wählhebel bei stehendem Fahrzeug in eine bestimmte Position gebracht wird und das Gaspedal betätigt wird. Die LaunchControl wird daraufhin vorbereitet, indem bei noch geöffneter Kupplung die Motordrehzahl auf einen festen Wert eingeregelt wird. Mit Loslassen des Bremspedals beschleunigt das Fahrzeug; d. h. der vorbereitete Anfahrvorgang wird anschließend mittels Kupplungsregelung im Sinne einer optimalen Beschleunigung weitergeführt.

Bei den bekannten Verfahren zur Durchführung von LaunchControl-Anfahrten wird der Triebstrang vor dem eigentlichen Start bereits durch teilweises Schließen der dem Anfahrgang zugeordneten Kupplung vorgespannt. Da dabei die gleiche Kupplung benutzt wird, die später beim Start belastet wird, führt dies zu einer sehr hohen thermischen Belastung. Aus Gründen des Bauteilschutzes sind die für Start und Vorspannung applizierbaren Parameter (Vorspannmoment, Vorspanndrehzahl) daher eingeschränkt.

Aufgabe der vorliegenden Erfindung ist es, ein Verfahren und eine entsprechend eingerichtete Steuerung zum Durchführen eines Startvorgangs eines Kraftfahrzeugs bereitzustellen, das die oben genannten Nachteile wenigstens teilweise überwindet.

Diese Aufgabe wird durch das erfindungsgemäße Verfahren nach Anspruch 1, sowie die entsprechend eingerichtete Steuerung nach Anspruch 6 gelöst. Weitere vorteilhafte Ausgestaltungen der Erfindung ergeben sich aus den Unteransprüchen und der folgenden Beschreibung bevorzugter Ausführungsbeispiele der vorliegenden Erfindung.

Die folgenden Ausführungsbeispiele betreffen ein Verfahren zum Durchführen eines Startvorgangs eines Kraftfahrzeugs. Das Kraftfahrzeug weist einen Getriebestrang auf, der ein Doppelkupplungsgetriebe mit einer ersten Kupplung, welche die ungeradzahligen Gänge trägt ( d.h. dem Teilgetriebe mit den ungeradzahligen Gänge zugeordnet ist), und einer zweiten Kupplung, welche die geradzahligen Gänge trägt (d.h. dem Teilgetriebe mit den geradzahligen Gänge zugeordnet ist), umfasst. Der ersten Kupplung ist somit der erste Gang, d.h. der Vorwärtsgang mit der größten Übersetzung zugeordnet, der als Anfahrgang bei dem erfindungsgemäßen Startvorgang verwendet wird. Zum Vorspannen des Getriebestranges wird zumindest teilweise die zweite Kupplung des Doppelkupplungsgetriebes verwendet. Eine unnötige thermische Belastung der für den Start notwendigen ersten Kupplung durch die Vorspannphase wird so vermieden. Konstruktive Vorteile werden optimal ausgenutzt.

Das Vorspannen des Getriebestranges beruht vollständig auf der zweiten Kupplung des Doppelkupplungsgetriebes. Dadurch kann die thermische Belastung der für den Start notwendigen ersten Kupplung bestmöglich reduziert werden.

Gemäß Alternativen, die nicht Teil der Erfindung sind, beruht das Vorspannen des Getriebestranges teilweise auf der zweiten Kupplung des Doppelkupplungsgetriebes und teilweise auf der ersten Kupplung des Doppelkupplungsgetriebes. Dadurch wird die thermische Belastung auf die beiden Kupplungen verteilt und somit die thermische Belastung der für den Start notwendigen ersten Kupplung zumindest reduziert.

Zum Vorspannen des Getriebestrangs kann beispielsweise Drehmoment von einer Kraftmaschine auf die zweite Kupplung des Doppelkupplungsgetriebes übertragen werden. Bei der Kraftmaschine kann es sich beispielsweise um eine Verbrennungskraftmaschine oder einen Elektromotor handeln, der als Traktionsmotor des Kraftfahrzeugs dient.

Das Vorspannen des Doppelkupplungsgetriebes erfolgt durch schlupfenden Betrieb der zweiten Kupplung. Durch den schlupfenden Betrieb der zweiten Kupplung wird das Getriebe vorgespannt, bevor das Kraftfahrzeug sich in Bewegung setzt.

Nach dem Vorspannen des Getriebestranges kann Drehmoment zum Beschleunigen das Kraftfahrzeugs auf die erste Kupplung übertragen werden. Der eigentliche Start kann damit durch die Kupplung des ersten Gangs abgewickelt werden. Die für die Vorspannung verwendete Kupplung wird zu Beginn des Starts geöffnet.

Das Doppelkupplungsgetriebe kann beispielsweise auf dem Typ der Nasskupplung beruhen.

Das beschriebene Verfahren kann beispielsweise für eine hydraulisch betätigte Lamellenkupplung eines Doppelkupplungsgetriebes zur Anwendung kommen. Anwendungen für andere Kupplungsarten sind ebenfalls möglich.

In einer vorteilhaften Variante sind die Kupplungen in der Doppelkupplung radial gestappelt, d.h. eine Kupplung ist radial innerhalb der anderen Kupplung angeordnet, wobei die erste Kupplung die radial äußere und die zweite Kupplung die radial innere ist. Weil das Kühlöl zu den Kupplungen radial von innen nach außen fließt, wird die radial innere Kupplung direkt von der Kühlölversorgungsleitung angeströmt und somit besser gekühlt. Ihre thermische Belastung kann dadurch besser und mit kleinerer Kühlölmenge als bei der radial äußeren auf einem niedrigeren Niveau gehalten werden. Somit wird der Energiebedarf der Kühlölpumpe gesenkt. Benutzung dieses Verfahrens ist dann besonders vorteilhaft für die Doppelkupplungen in der Radialbauweise, bei denen das Kühlöl zu der radial äußeren Kupplung durch die radial innere strömt.

Bei dem Startvorgang kann es sich um einen Rennstart handeln. Das Verfahren kann beispielsweise im Rahmen einer LaunchControl genutzt werden. Die LaunchControl dient beispielsweise dazu, ein Fahrzeug mit automatisiertem Schaltgetriebe optimal auf die Höchstgeschwindigkeit zu beschleunigen. Im Rahmen einer LaunchControl kann die Schaltautomatik so gesteuert werden, dass beim Anfahren diejenige Drehzahl anliegt, die das Fahrzeug ohne durchdrehende Räder aus dem Stand am besten beschleunigt.

Die vorliegende Erfindung betrifft auch eine Steuerung, die dazu eingerichtet ist, die oben beschriebenen Verfahren auszuführen. Bei der Steuerung kann es sich beispielsweise um ein Getriebesteuerungsmodul und/oder um ein Motorsteuerungsmodul handeln. Das erfindungsgemäße Verfahren kann beispielsweise als computerimplementiertes Verfahren in einem Steuerungsmodul implementiert werden, das einen Prozessor, Speicher und Kommunikationsschnittstellen aufweist. Insbesondere kann das Verfahren in Form von Programmbefehlen implementiert werden, die auf einem Prozessor, z.B. eines Getriebesteuerungsmoduls, ausgeführt werden. Auch ist ein Kraftfahrzeug Gegenstand dieser Erfindung, das eine derartige Steuerung umfasst.

Bei dem Kraftfahrzeug kann es sich beispielsweise um ein Fahrzeug mit Verbrennungsmotor, ein Elektrofahrzeug, ein Hybridelektrofahrzeug oder dergleichen handeln.

Ausführungsbeispiele der Erfindung werden nun beispielhaft und unter Bezugnahme auf die beigefügten Zeichnungen beschrieben, in denen:
Fig. 1 schematisch ein Ausführungsbeispiel eines Antriebsstrangs eines Kraftfahrzeugs zeigt;
Fig. 2 schematisch die Funktionsweise eines Doppelkupplungsgetriebes zeigt;
Fig. 3 beispielhafte Steuerungsmodule eines Kraftfahrzeugs zeigt;
Fig. 4a einen beispielhaften Startvorgang gemäß der vorliegenden Erfindung in einem Diagramm zeigt;
Fig. 4b einen weiteren beispielhaften Startvorgang gemäß einer Alternative in einem Diagramm zeigt; und
Fig. 5 ein schematisches Flussdiagramm eines beispielhaften Verfahrens zum Durchführen eines Startvorgangs gemäß der vorliegenden Erfindung zeigt.
Fig. 6 zeigt eine Doppelkupplung mit nassen Kupplungen in Radialbauweise, bei den die zweite Kupplung radial innerhalb der ersten Kupplung angeordnet ist.

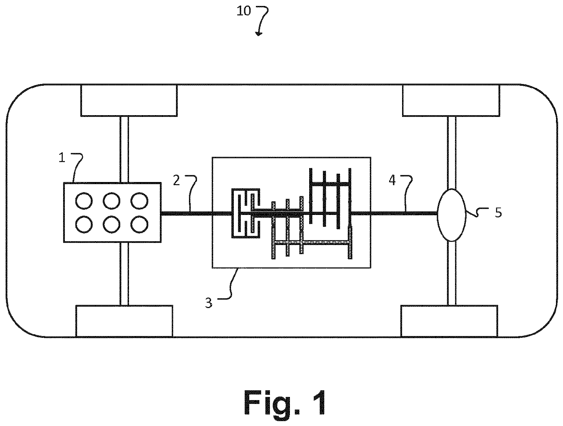

Fig. 1 zeigt schematisch ein Ausführungsbeispiel eines Antriebsstrangs eines Kraftfahrzeugs 10. Der Antriebsstrang umfasst eine Verbrennungskraftmaschine 1, die ein Eingangsdrehmoment erzeugt und dieses Eingangsdrehmoment über eine Kurbelwelle 2 an ein Doppelkupplungsgetriebe 3 liefert. Das Ausgangsdrehmoment des Doppelkupplungsgetriebes 3 wird über eine Ausgangswelle 4 und ein Achsdifferential 5 auf die Räder des Kraftfahrzeugs 10 übertragen, um das Kraftfahrzeug 10 anzutreiben.

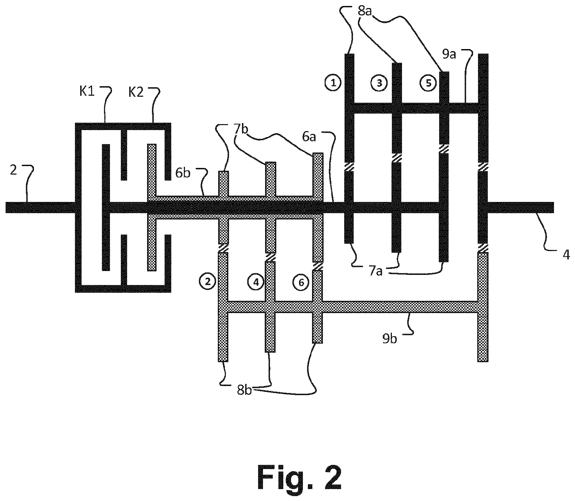

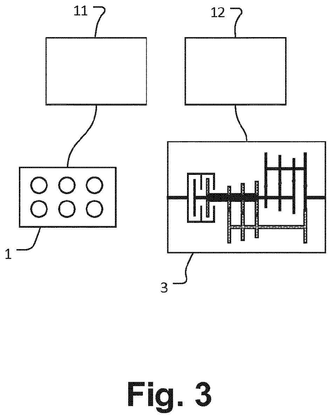

Fig. 2 zeigt schematisch die Funktionsweise des Doppelkupplungsgetriebes 3. Wie die schematische Abbildung zeigt, besteht das Doppelkupplungsgetriebe 3 aus zwei automatisierten Teilgetrieben mit jeweils einer Kupplung K1, K2. Das eine Teilgetriebe trägt die geraden Gänge, das andere Teilgetriebe trägt die ungeraden Gänge. Die Kupplungen K1 und K2 sind in diesem Ausführungsbeispiel vom Typ der Nasskupplung. Zugehörige elektronische und hydraulische Kupplungssteuerungseinrichtungen (siehe Fig. 3) steuern den Schaltbetrieb und das Anfahren des Fahrzeugs. Das Doppelkupplungsgetriebe 3 weist eine Welle 6a auf, die mit der ersten Kupplung K1 verbunden ist, sowie eine Hohlwelle 6b, die mit der zweiten

Kupplung K2 verbunden ist. Die Welle 6a ist nur mit den ungeraden Zahnradsätzen 7a verbunden. Die zweite Welle 6b ist nur mit den geraden Zahnradsätzen 7b verbunden, die einen Rückwärtsgangzahnradsatz einschließen. Das Doppelkupplungsgetriebe 3 umfasst ferner obere und untere Hauptwellen 9a bzw. 9b, die mit Achsantriebszahnradsätzen 8a, 8b verbunden sind. Die Achsantriebszahnradsätze 8a und 8b sind ihrerseits mit der Ausgangswelle 4 des Doppelkupplungsgetriebes 3 verbunden und sind ausgestaltet, um erforderliche Achsgetriebeuntersetzungen bereitzustellen. Die erste Kupplung K1 steuert alle ungeradzahligen Zahnradsätze des Doppelkupplungsgetriebes, hier den ersten, dritten, und fünften Gang in einem beispielhaften 6-Gang-Getriebe. Die zweite Kupplung K2 steuert jeden geradzahligen Zahnradsatz, hier den zweiten, vierten und sechsten des beispielhaften 6-Gang-Getriebes. Innerhalb der Zahnradsätze sind zusätzliche Kupplungselemente angeordnet, die eingerückt oder ausgerückt werden, um den gewünschten Gangzustand herzustellen. Der Rückwärtsgang kann Teil des ungeradzahligen Zahnradsatzes 8a sein und über die erste Kupplung K1 gesteuert werden. Das Doppelkupplungsgetriebe 3 realisiert ein automatisiertes Schaltgetriebe, das mittels zweier Teilgetriebe einen vollautomatischen Gangwechsel ohne Zugkraftunterbrechung ermöglicht.

Im obigen Ausführungsbeispiel ist die zweite Kupplung des Doppelkupplungsgetriebes als jene beschrieben, welche über eine Hohlwelle mit entsprechenden Zahnradsätzen verbunden ist, wogegen die erste Kupplung mit einer in dieser Hohlwelle gelegenen Welle mit entsprechenden Zahnradsätzen verbunden ist. In alternativen Ausführungsbeispielen kann dies auch umgekehrt sein. Die Begriffe "erste" Kupplung und "zweite" Kupplung sind in solcher Hinsicht nicht als beschränkend aufzufassen.

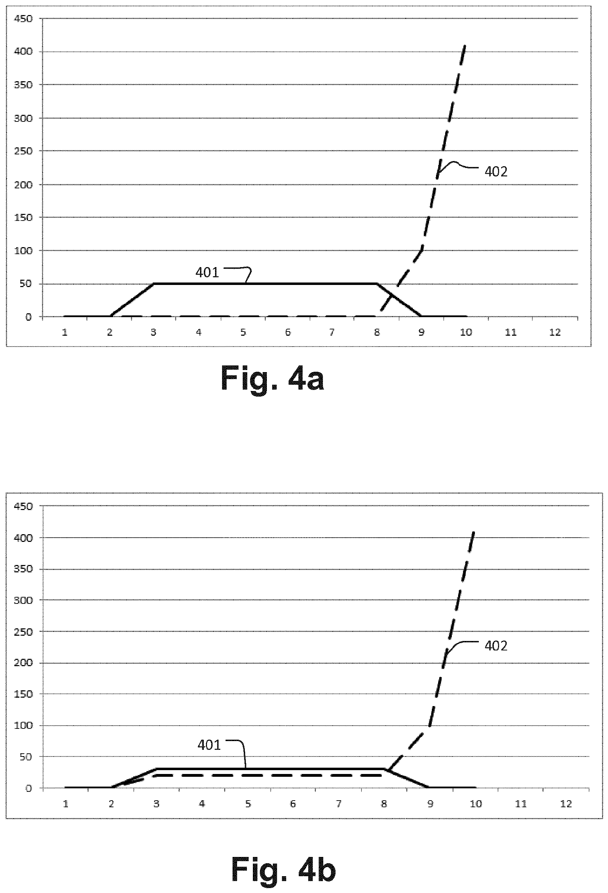

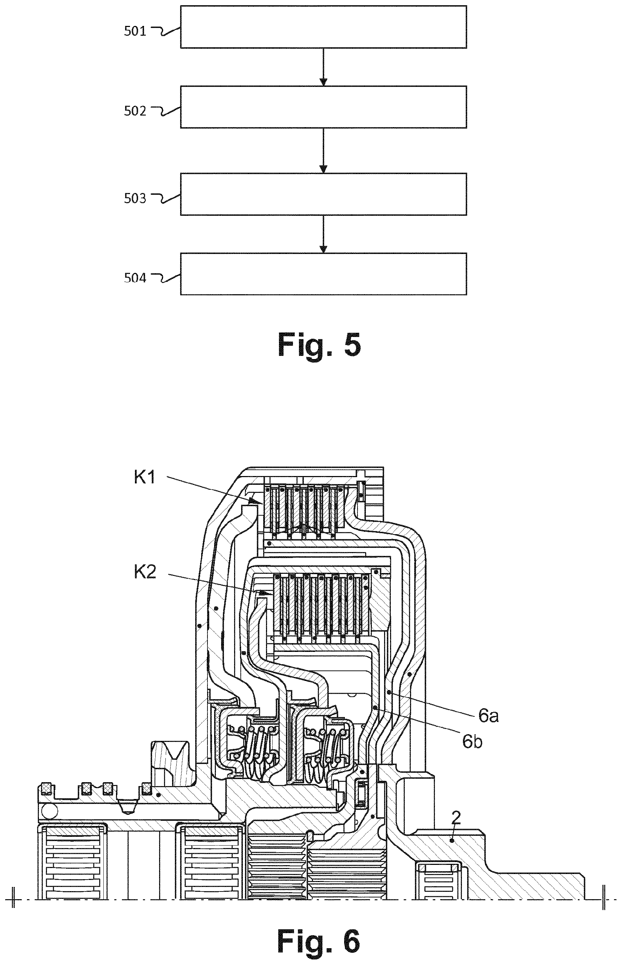

Fig. 3 zeigt beispielhafte Steuerungsmodule eines Kraftfahrzeugs. Ein Kraftfahrzeug weist in diesem Ausführungsbeispiel ein Getriebesteuerungsmodul 11 zur Steuerung des Doppelkupplungsgetriebes 3 und ein Motorsteuerungsmodul 12 zur Steuerung der Verbrennungskraftmaschine 1 auf. Das Getriebesteuerungsmodul 11 und das Motorsteuerungsmodul 12 dieses Ausführungsbeispiels beruhen auf Mikroprozessoren und Speicherbausteinen, sowie Kommunikationsschnittstellen. Das Getriebesteuerungsmodul 11 und das Motorsteuerungsmodul 12 sind programmiert, um die erforderlichen Schritte des erfindungsgemäßen Anfahrsteuerungsverfahrens auszuführen, beispielsweise das Verfahren, das in den folgenden Figuren 4a, b und 5 beschrieben ist.

Fig. 4a zeigt einen beispielhaften erfindungsgemäßen Startvorgang in einem Diagramm. In dem Diagramm ist über der Zeit zum einen das Drehmoment 401 aufgetragen, das von der Verbrennungskraftmaschine auf das zweite Teilgetriebe eines Doppelkupplungsgetriebes, das die geradzahligen Gänge trägt (durchgezogene Linie), ausgeübt wird, zum anderen das Drehmoment 402, das der Verbrennungsmotor auf das erste Teilgetriebe des Doppelkupplungsgetriebes ausübt, das die ungeradzahligen Gänge trägt (gestrichelte Linie). Zu Beginn des Startvorgangs wird das Doppelkupplungsgetriebe von der Getriebesteuerung so eingerichtet, dass der erste Gang des Doppelkupplungsgetriebes (erstes Teilgetriebe) und der zweite Gang des Doppelkupplungsgetriebes (zweites Teilgetriebe) gleichzeitig eingelegt sind.

Zum Zeitpunkt 2 beginnt der Startvorgang, indem ein Vorspannmoment von 50 Nm auf die zweite Kupplung (K2) des Doppelkupplungsgetriebes übertragen wird. Die zweite Kupplung (K2) wird schlupfend betrieben, so dass der Getriebestrang des Kraftfahrzeugs vorgespannt wird, ohne dass das Kraftfahrzeug bereits beschleunigt. Die durch den schlupfenden Kupplungsbetrieb erzeugte Reibungswärme fließt in das zweite Teilgetriebe, insbesondere in die Kupplungsscheiben der zweiten Kupplung (K2), wärmt diese auf und wird von Kühlmittel, das zur Kühlung des zweiten Teilgetriebes vorgesehen ist, zumindest teilweise abgeführt. Zum Zeitpunkt 5 wird die Vorspannphase von der Getriebesteuerung beendet. Das Drehmoment 401, das auf die zweite Kupplung (K2) übertragen wurde, wird von der Getriebesteuerung statt auf die zweite Kupplung (K2) auf die erste Kupplung (K1) übertragen ("übergeblendet"), in der der erste Gang bereits voreingelegt ist. Der eigentliche Beschleunigungsvorgang des Fahrzeugs beginnt, indem das Drehmoment 402 auf die erste Kupplung (K1) erhöht wird. Die erste Kupplung wird von der Getriebesteuerung ganz oder teilweise eingerückt. Das Fahrzeug wird durch die Übertragung von Drehmoment auf die Räder beschleunigt. Der genaue Drehmomentenverlauf während des Beschleunigungsvorgangs hängt vom Fahrerwunsch ab. In dem hier gezeigten Beispiel hat das Drehmoment zum Zeitpunkt 9 sein Maximum erreicht und nimmt ab diesem Zeitpunkt wieder ab. Zum Zeitpunkt 11 ist der Startvorgang beendet. Dadurch, dass für die Vorspannphase die zweite Kupplung (K2) verwendet wird, wird eine Erwärmung der ersten Kupplung (K1), insbesondere der Kupplungsscheiben der ersten Kupplung (K1) während des Vorspannens vermieden. Das erste Teilgetriebe kann dadurch während des eigentlichen Beschleunigungsvorgangs stärker belastet werden, als wenn es bereits durch den Vorspannprozess erwärmt worden wäre.

Die Zeitskala in Fig. 4a ist lediglich exemplarisch gewählt. Die Vorspannphase (Zeitpunkt 2 bis 8 in Fig. 4a) kann beispielsweise 6 bis 10s dauern. Der Momentaufbau bis auf Maximalmoment (Zeitpunkt 8 bis 10 in Fig. 4a) kann in kürzer als 1s erfolgen.

Fig. 4b zeigt einen beispielhaften Startvorgang gemäß einer Alternative in einem Diagramm. In dem Diagramm ist wiederum zum einen das Drehmoment 401 aufgetragen, das von der Verbrennungskraftmaschine auf das zweite Teilgetriebe eines Doppelkupplungsgetriebes, das die geradzahligen Gänge trägt (durchgezogene Linie), ausübt, zum anderen das Drehmoment 402, das der Verbrennungsmotor auf das erste Teilgetriebe des Doppelkupplungsgetriebes ausübt, das die ungeradzahligen Gänge trägt (gestrichelte Linie). Im Unterschied zu Fig. 4a wird jedoch zum Vorspannen des Getriebestrangs sowohl der zweite Gang des Doppelkupplungsgetriebes (zweites Teilgetriebe) als auch der erste Gang des Doppelkupplungsgetriebes (erstes Teilgetriebe) verwendet. In dem hier gezeigten Beispiel werden 30 Nm des Vorspannmoments auf die zweite Kupplung (K2) übertragen und 20 Nm des Vorspannmoments auf die erste Kupplung (K1) übertragen. Dadurch, dass für die Vorspannphase zumindest teilweise die zweite Kupplung verwendet wird, wird eine Erwärmung der ersten Kupplung, insbesondere der Kupplungsscheiben der ersten Kupplung (K1) reduziert. Das erste Teilgetriebe kann dadurch während des Beschleunigungsvorgangs stärker belastet werden, als wenn es das gesamte Vorspannmoment alleine hätte aufbringen müssen.

Die in den Figuren 4a und 4b gezeigten Ausführungsbeispiele sind lediglich beispielhaft zu verstehen. Dem Fachmann ist ersichtlich, dass eine alternative Getriebesteuerung das Vorspannmoment beliebig auf die erste Kupplung und die zweite Kupplung aufteilen kann. Wird für die Vorspannung des Getriebestranges zumindest teilweise Drehmoment statt auf die erste Kupplung (K1) auf die zweite Kupplung (K2) übertragen, so wird weniger Wärme auf das erste Teilgetriebe übertragen, als wenn für die Vorspannung des Getriebestranges lediglich die erste Kupplung (K1) genutzt würde.

Fig. 5 zeigt ein schematisches Flussdiagramm eines beispielhaften Verfahrens zum Durchführen eines Startvorgangs gemäß der vorliegenden Erfindung. Bei Schritt 501 wird sowohl der erste als auch der zweite Gang des Doppelkupplungsgetriebes eingelegt. Bei Schritt 502 wird die zweite Teilkupplung eingerückt, so dass in einem schlupfenden Betrieb ein Vorspannmoment auf den zweiten Gang übertragen wird. Bei Schritt 503 wird die zweite Teilkupplung wieder ausgerückt und stattdessen die erste Teilkupplung des Doppelkupplungsgetriebes eingerückt und dadurch das von der Verbrennungskraftmaschine erzeugte Drehmoment auf den ersten Gang übergeblendet. Bei Schritt 504 wird das Drehmoment der Verbrennungskraftmaschine schnell erhöht, um einen Beschleunigungsvorgang des Kraftfahrzeugs gemäß Fahrerwunsch durchzuführen.

In den obigen Ausführungsbeispielen wird der zweite Gang (auf dem zweiten Teilgetriebe) für das Vorspannen des Getriebestrangs verwendet. Dem Fachmann ist jedoch ersichtlich, dass in alternativen Ausführungsbeispielen auch Gang 4 oder 6 zum Vorspannen des Getriebestrangs verwendet werden könnten.

### Bezugszeichenliste

- 1: Verbrennungskraftmaschine
- 2: Kurbelwelle
- 3: Doppelkupplungsgetriebe
- 4: Ausgangswelle
- 5: Achsdifferential
- 6a: Welle
- 6b: Hohlwelle
- 7a: ungerade Zahnradsätze (erstes Teilgetriebe)
- 7b: gerade Zahnradsätze (zweites Teilgetriebe)
- 8a: Achsantriebszahnradsätze (erstes Teilgetriebe)
- 8b: Achsantriebszahnradsätze (zweites Teilgetriebe)
- 9a: Hauptwelle (erstes Teilgetriebe)
- 9b: Hauptwelle (zweites Teilgetriebe)
- 10: Kraftfahrzeug
- 11: Getriebesteuerungsmodul
- 12: Motorsteuerungsmodul
- K1: Teilkupplung (erstes Teilgetriebe)
- K2: Teilkupplung (zweites Teilgetriebe)

- 401: Drehmoment (erstes Teilgetriebe)
- 402: Drehmoment (zweites Teilgetriebe)

- 501: Einlegen sowohl des ersten als auch des zweiten Gangs
- 502: Einrücken der zweiten Teilkupplung
- 503: Ausrücken der zweiten Teilkupplung und einrücken der ersten Teilkupplung
- 504: Erhöhung des Drehmoments

## Patentansprüche

1. Verfahren zum Durchführen eines Startvorgangs eines Kraftfahrzeugs (10) mit einem Getriebestrang umfassend ein Doppelkupplungsgetriebe (3) mit einer ersten Kupplung (K1), welche die ungeradzahligen Gänge trägt, und einer zweiten Kupplung (K2), welche die geradzahligen Gänge trägt, wobei zum Vorspannen des Getriebestranges vollständig die zweite Kupplung (K2) des Doppelkupplungsgetriebes verwendet wird und das Vorspannen durch schlupfenden Betrieb der zweiten Kupplung (K2) erfolgt.

2. Verfahren nach einem der vorstehenden Ansprüche, bei dem zum Vorspannen des Getriebestrangs Drehmoment von einer Kraftmaschine (1) auf die zweite Kupplung (K2) des Doppelkupplungsgetriebes (3) übertragen wird.

3. Verfahren nach einem der vorstehenden Ansprüche, wobei nach dem Vorspannen des Getriebestranges Drehmoment zum Beschleunigen das Kraftfahrzeugs auf die erste Kupplung (K1) übertragen wird.

4. Verfahren nach einem der vorstehenden Ansprüche, wobei das Doppelkupplungsgetriebe auf dem Typ der Nasskupplung beruht.

5. Verfahren nach dem vorstehenden Anspruch, wobei die zweite Kupplung (K2) radial innerhalb der ersten Kupplung (K1) angeordnet ist, wobei insbesondere der Kühlölström zu der ersten Kupplung (K1) durch die zweite Kupplung (K2) strömt.

6. Steuerung, die dazu eingerichtet ist, das Verfahren nach einem der vorstehenden Ansprüche auszuführen.

7. Kraftfahrzeug, mit einer Steuerung nach Anspruch 6.

## Claims

1. Method for carrying out a starting operation of a motor vehicle (10) with a power train comprising a double clutch transmission (3) with a first clutch (K1) which supports the odd gears, and a second clutch (K2) which supports the even gears, the second clutch (K2) of the double clutch transmission being used in order to prestress the power train completely, and the prestressing taking place by way of slipping operation of the second clutch (K2).

2. Method according to one of the preceding claims, in the case of which method, in order to prestress the power train, torque is transmitted from an engine (1) to the second clutch (K2) of the double clutch transmission (3).

3. Method according to either of the preceding claims, torque for accelerating the motor vehicle being transmitted to the first clutch (K1) after the prestressing of the power train.

4. Method according to one of the preceding claims, the double clutch transmission being based on the wet clutch type.

5. Method according to the preceding claim, the second clutch (K2) being arranged radially inside the first clutch (K1), the cooling oil stream flowing, in particular, through the second clutch (K2) to the first clutch (K1).

6. Controller which is set up to carry out the method according to one of the preceding claims.

7. Motor vehicle, with a controller according to Claim 6.

## Revendications

1. Procédé pour effectuer une opération de démarrage d'un véhicule automobile (10) avec une chaîne de transmission comprenant une transmission à double embrayage (3) avec un premier embrayage (K1) qui porte les rapports impairs et un deuxième embrayage (K2) qui porte les rapports pairs, dans lequel, pour la précontrainte de la chaîne de transmission, le deuxième embrayage (K2) de la transmission à double embrayage est utilisé complètement et la précontrainte s'effectue par activation en mode de patinage du deuxième embrayage (K2).

2. Procédé selon l'une quelconque des revendications précédentes, dans lequel, pour la précontrainte de la chaîne de transmission, un couple est transmis depuis un moteur (1) au deuxième embrayage (K2) de la transmission à double embrayage (3).

3. Procédé selon l'une quelconque des revendications précédentes, dans lequel, après la précontrainte de la chaîne de transmission, un couple est transmis au premier embrayage (K1) pour accélérer le véhicule automobile.

4. Procédé selon l'une quelconque des revendications précédentes, dans lequel la transmission à double embrayage est basée sur un embrayage de type humide.

5. Procédé selon la revendication précédente, dans lequel le deuxième embrayage (K2) est disposé radialement à l'intérieur du premier embrayage (K1), le flux d'huile de refroidissement vers le premier embrayage (K1) s'écoulant notamment à travers le deuxième embrayage (K2).

6. Commande prévue pour mettre en œuvre le procédé selon l'une quelconque des revendications précédentes.

7. Véhicule automobile comprenant une commande selon la revendication 6.
